# EUROPEAN PATENT APPLICATION

(11) **EP 4 269 848 A1**
(43) Date of publication of application: **01.11.2023**
(21) Application number: 21914985.3
(22) Date of filing: 26.10.2021
(51) Int. Cl.: F16K 17/06

(54) **RELIEF VALVE WITH CHECK FUNCTION**

(30) Priority: 28.12.2020 JP 2020218894
(71) Applicant: KAWASAKI JUKOGYO KABUSHIKI KAISHA, Kobe-shi, Hyogo 650-8670 (JP)
(72) Inventor: ITO, Noboru, Hyogo 6508670 (JP); NAKAHARA, Akihiro, Hyogo 6508670 (JP); FUJIWARA, Hiroaki, Hyogo 6508670 (JP); FUNAKUBO, Yuko, Hyogo 6508670 (JP); KAMEYAMA, Fumio, Hyogo 6508670 (JP)
(74) Representative: EIP
(86) International application number: PCT/JP2021/039542
(87) International publication number: WO 2022/145124

(57) **Abstract**

A relief valve with a check function relieves hydraulic fluid from a first port to a second port, and includes a housing having a body, and an adjustment member provided to be capable of advancing and retracting with respect to the body; a seat member provided in the body, the seat member being formed with a relief passage connecting to each of the first port and the second port; a relief valve body that is unseated from or seated on the seat member to open or close the relief passage, the relief valve body receiving pressure of the first port in a direction of opening the relief passage; a first biasing member that biases the relief valve body against the pressure of the first port, with a biasing force being adjusted by advance or retraction of the adjustment member; a check valve body that opens or closes a check passage connecting to each of the first port and the second port, the check valve body receiving pressure of the second port in a direction of opening the check passage; and a second biasing member that biases the check valve body against the pressure of the second port.

## Description

### Technical Field

The present invention relates to a relief valve with a check function that relieves hydraulic fluid from a first port to a second port.

### Background Art

A relief valve with a check function relieves hydraulic oil from a first port to a second port when the pressure of the first port becomes higher than a preset pressure (relief function). Also, the relief valve with a check function is capable of supplying the hydraulic oil from the second port to the first port when the pressure of the second port becomes higher than the pressure of the first port (check function). As such a relief valve with a check function, for example, a relief valve with a check function of PTL 1 is known.

### Citation List

### Patent Literature

PTL 1: Japanese Unexamined Utility Model Publication No. Hei 2-105669

### Summary of Invention

### Technical Problem

The relief valve with a check function of PTL 1 has a first valve body having a check function, and a second valve body having a relief function. In the relief valve with a check function, the second valve body is inserted through the first valve body. And, when the first valve body operates, the first valve body and the second valve body integrally move. As described above, since the first valve body and the second valve body are integrally configured, a mechanism that adjusts the relief pressure from outside is not provided.

In light of the above, it is an object of the present invention to provide a relief valve with a check function capable of adjusting the relief pressure from outside.

### Solution to Problem

A relief valve with a check function of the present invention is a relief valve with a check function that relieves hydraulic fluid from a first port to a second port, the relief valve with a check function including: a housing having a body, and an adjustment member provided to be capable of advancing and retracting with respect to the body; a seat member provided in the body, the seat member being formed with a relief passage connecting to each of the first port and the second port; a relief valve body that is unseated from or seated on the seat member to open or close the relief passage, the relief valve body receiving pressure of the first port in a direction of opening the relief passage; a first biasing member that biases the relief valve body against the pressure of the first port, with a biasing force being adjusted by advance or retraction of the adjustment member; a check valve body that opens or closes a check passage connecting to each of the first port and the second port, the check valve body receiving pressure of the second port in a direction of opening the check passage; and a second biasing member that biases the check valve body against the pressure of the second port.

According to the present invention, it is possible to adjust the biasing force of the first biasing member by advancing or retracting the adjustment member with respect to the body. Thus, it is possible to adjust the relief pressure from outside.

The above objects, other objects, features, and merits of the present invention will be apparent from the detailed description of the following preferred embodiments with reference to attached drawings.

### Advantageous Effects of Invention

According to the present invention, it is possible to adjust the relief pressure from outside.

### Brief Description of Drawings

Fig. 1 is a sectional view showing a relief valve with a check function according to Embodiment 1 of the present invention.
Fig. 2 is a sectional view showing relief operation of the relief valve with a check function of Fig. 1.
Fig. 3 is a sectional view showing check operation of the relief valve with a check function of Fig. 1.
Fig. 4 is a sectional view showing a relief valve with a check function according to Embodiment 2 of the present invention.
Fig. 5 is a sectional view showing a relief valve with a check function according to Embodiment 3 of the present invention.

### Description of Embodiments

Hereinafter, relief valves with a check function 1, 1A, 1B of Embodiments 1 to 3 according to the present invention are described by referring to the aforementioned drawings. The concept of the direction used in the following description is merely used for convenience in description, and should not be understood to limit the orientation or the like of the configuration of the invention to the described direction. Also, each of the relief valves with a relief function 1, 1A, 1B described below is merely one embodiment of the present invention. Therefore, the present invention is not limited to the embodiments, and addition, deletion, and modification can be made without departing from the scope of the invention.

### Embodiment 1

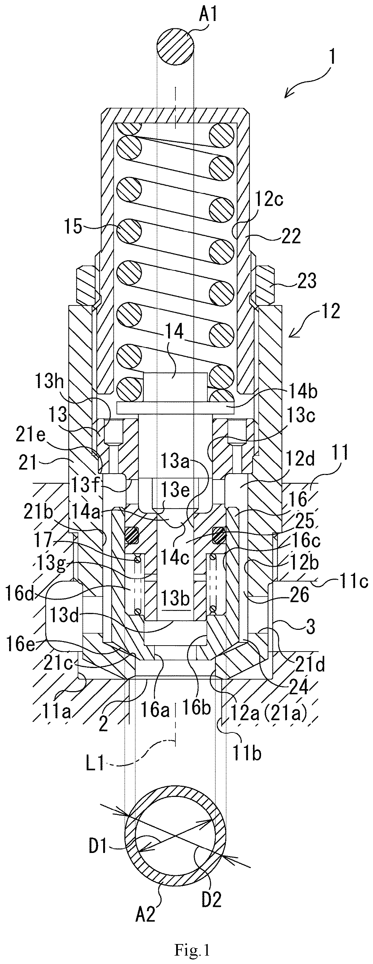

A hydraulic circuit includes a relief valve 1 as shown in Fig. 1. As the pressure of hydraulic fluid of a first port 2 exceeds a predetermined pressure (namely, relief pressure), the relief valve 1 flows the hydraulic fluid from the first port 2 to a second port 3. Also, when the pressure of the hydraulic fluid of the first port 2 is lower than the pressure of the second port 3, the relief valve 1 flows the hydraulic fluid from the second port 3 to the first port 2. In the present embodiment, the first port 2 is, for example, an actuator port, and the second port 3 is a tank port. More specifically, the relief valve 1 includes a valve block 11, a housing 12, a seat member 13, a relief valve body 14, a first biasing member 15, a check valve body 16, and a second biasing member 17.

### Valve block

The valve block 11 is a block body to which the housing 12 is to be attached. More specifically, the valve block 11 has a valve hole 11a, a first passage 11b, and a second passage 11c. The valve hole 11a is a bottomed hole formed along an axial line L1. In the bottom surface that defines the valve hole 11a, the first port 2 is formed. The first passage 11b connects to the valve hole 11a via the first port 2. In the inner peripheral surface that defines the valve hole 11a, the second port 3 is formed. The second passage 11c connects to the valve hole 11a via the second port 3.

### Housing

The housing 12 accommodates therein the seat member 13, the relief valve body 14, the first biasing member 15, the check valve body 16, and the second biasing member 17. Also, the housing 12 has a body 21, an adjustment plug 22, and a locknut 23. More specifically, the housing 12 is formed to have, for example, a topped cylindrical shape. Then, the housing 12 is inserted through the valve hole 11a with an opening 12a being directed to the first port 2. Therefore, the interior of the housing 12 connects to the first port 2 via the opening 12a of the housing 12.

The body 21 is inserted through the valve hole 11a with one end part which is an end part of one side in the axial direction being directed to the first port 2. More specifically, the body 21 is formed to have a cylindrical shape. And, the body 21 is screwed with the valve block 11. Also, the inner hole of the body 21 has an opening hole 21a and an inner space 21b. The opening hole 21a is formed in the one end part that is an end part of one side in the axial direction of the body 21. Also, the opening hole 21a is formed to have a smaller diameter than the inner space 21b. And, in the body 21, a check valve seat 21c is formed to surround the opening hole 21a. Also, in the inner space 21b, a step part 21e is formed in a middle portion in the axial direction, and the inner space 21b is formed to have a small diameter on one side in the axial direction from the step part 21e compared with the other side in the axial direction. Further, in the outer peripheral surface of the body 21, a plurality of communication passages 21d are formed in a portion of one side in the axial direction. The plurality of communication passages 21d radially penetrate the body 21. And, the plurality of communication passages 21d form a check passage 24 together with the opening hole 21a and the inner space 21b. That is, the check passage 24 is a passage that runs from the plurality of communication passages 21da to the opening hole 21a through the inner space 21b. The one end part of the body 21 is formed to have a tapered shape that is tapered toward one side in the axial direction in the present embodiment. The body 21 is inserted into the valve hole 11a such that the one end part seals the periphery of the first port 2, and is screwed with the valve block 11. Also, the opening hole 21a is located opposite to the first port 2, and the plurality of communication passages 21d are located at positions corresponding to the second port 3. Therefore, the opening hole 21a connects to the first port 2, and the plurality of communication passages 21d connect to the second port 3.

The adjustment plug 22 which is one example of an adjustment member is provided to be capable of advancing and retracting with respect to the body 21. More specifically, the adjustment plug 22 is formed to have a topped cylindrical shape. An opening side portion of the adjustment plug 22 is screwed in the body 21. That is, the adjustment plug 22 advances and retracts axially with respect to the body 21 by being rotated about the axial line (coincident with the axial line L1 in the present embodiment). In the present embodiment, the adjustment plug 22 is configured to be rotatable with the use of a jig such as a spanner, a hexagon wrench, and a screw driver.

The locknut 23 restricts advance and retraction of the adjustment plug 22 with respect to the body 21. More specifically, the locknut 23 is formed to have an annular shape. And, the locknut 23 is screwed with a middle portion of the adjustment plug 22. The locknut 23 is fastened to come into contact with an other end part that is an end part of the other side in the axial direction of the body 21. As a result, advance and retraction in the axial direction of the adjustment plug 22 with respect to the body 21 is restricted. On the other hand, the locknut 23 is loosened to leave the other end part of the body 21. Thus, advance and retraction in the axial direction of the adjustment plug 22 with respect to the body 21 is allowed.

### Seat member

The seat member 13 is provided inside the housing 12. Also, in the seat member 13, a relief passage 25 is formed. The relief passage 25 connects to each of the first port 2 and the second port 3. More specifically, the seat member 13 is formed to have a cylindrical shape. Still more specifically, a middle portion of the seat member 13 is formed to have a larger diameter than a one-end side portion in the axial direction, and have a smaller diameter than an other end side portion in the axial direction. Also, in an inner hole 13a of the seat member 13, a portion of one side in the axial direction forms a passage portion 13b, and a portion of the other side in the axial direction forms a valve insertion portion 13c. The passage portion 13b is formed to have a smaller diameter than the valve insertion portion 13c. And, around the portion where the passage portion 13b opens to the valve insertion portion 13c, a relief valve seat 13e is formed. Also, in the middle portion of the seat member 13, a plurality of through passages 13f are formed. The plurality of through passages 13f form the relief passage 25 in the seat member 13 together with the inner hole 13a. That is, the relief passage 25 is a passage that runs from the passage portion 13b to the plurality of through passages 13f through the valve insertion portion 13c. Further, in the outer peripheral surface of the one-end side portion in the axial direction of the seat member 13, a plurality of communication holes 13g are formed. The plurality of communication holes 13g radially penetrate the one-end side portion in the axial direction of the seat member 13. Further, in the other end side portion in the axial direction of the seat member 13, a plurality of communication passages 13h are formed around the inner hole 13a. The communication passages 13h form a large-diameter portion of the seat member 13 parallel with the axial line L1. Also, the communication passages 13h form a restrictor.

The seat member 13 configured as described above is located in a middle portion of the housing 12. More specifically, the seat member 13 is located on one side in the axial direction from the adjustment plug 22 inside the body 21. And, the seat member 13 is fixed inside the housing 12 by making the large-diameter portion be screwed with the inner peripheral surface of the body 21, and engaged with the step part 21e. Accordingly, the interior of the housing 12 is partitioned by the seat member 13 into a valve space 12b on one side in the axial direction and a first spring accommodating space 12c on the other side in the axial direction. Also, the seat member 13 is located such that the opening of one side in the axial direction is directed to the first port 2. Accordingly, an annular space 12d is formed between the middle portion of seat member 13 and the body 21, in the valve space 12b. And, the through passages 13f connect to the second port 3 via the annular space 12d. Since the opening of one side in the axial direction is directed to the first port 2, the passage portion 13b of the relief passage 25 connects to the first port 2. And, the communication passages 13h connect the valve space 12b and the first spring accommodating space 12c.

### Relief valve body

The relief valve body 14 can be unseated from or seated on the seat member 13. Also, by unseating from or seating on the seat member 13, the relief passage 25 opens or closes. Further, the relief valve body 14 receives the pressure of the first port 2 in the direction of opening the relief passage 25 (hereinafter, referred to as "first opening direction"). More specifically, the relief valve body 14 is inserted through the valve insertion portion 13c. The relief valve body 14 is seated on the relief valve seat 13e by a distal end side portion 14a located on one side in the axial direction. Also, the relief valve body 14 is capable of sliding in the axial direction. Therefore, the relief valve body 14 is unseated from or seated on the relief valve seat 13e to open or close the relief passage 25. Also, the relief valve body 14 is configured as follows in the present embodiment.

That is, the relief valve body 14 is a direct-acting valve body formed of a solid member, and is formed to have a cylindrical shape. And, a middle portion of the relief valve body 14 is slidably supported by the seat member 13. Also, in the relief valve body 14, the distal end side portion 14a located on one side in the axial direction is formed to have a smaller diameter than the middle portion. The distal end side portion 14a of the relief valve body 14 is formed to have an acuminate shape. And, the distal end side portion 14a of the relief valve body 14 is seated on the relief valve seat 13e in such a manner that it sticks into the passage portion 13b. Therefore, the distal end side portion 14a of the relief valve body 14 forms a pressure receiving part 14c. That is, the relief valve body 14 receives the hydraulic pressure of the passage portion 13b by the pressure receiving part 14c. More specifically, the relief valve body 14 receives the hydraulic pressure of the passage portion 13b in the portion corresponding to the passage portion 13b (see a first pressure receiving area A1 of the pressure receiving part 14c in Fig. 1). Since the hydraulic fluid of the first port 2 is guided to the passage portion 13b, the relief valve body 14 receives the hydraulic pressure of the first port 2 in the pressure receiving part 14c of the distal end side portion 14a. The relief valve body 14 receives from the hydraulic fluid the load that is the product of the first pressure receiving area A1 of the pressure receiving part 14c multiplied by the pressure of the first port 2 in the first opening direction. Therefore, the relief valve body 14 is unseated from or seated on the seat member 13 in accordance with the pressure of the first port 2. Also, the relief valve body 14 has a spring bearing part 14b on the outer peripheral surface of a proximal end side portion located on the other side in the axial direction.

### First biasing member

The first biasing member 15 biases the relief valve body 14 in the direction of closing the relief passage 25 (hereinafter, referred to as "first closing direction") against the pressure of the first port 2. More specifically, the first biasing member 15 is a spring member. In the present embodiment, the first biasing member 15 is a compression coil spring. The first biasing member 15 is accommodated in the first spring accommodating space 12c of the housing 12 (namely, inside the adjustment plug 22) in a compressed state. More specifically, the first biasing member 15 comes into contact with the spring bearing part 14b of the relief valve body 14 at one end part, and comes into contact with the ceiling surface of the adjustment plug 22 at the other end part. Thus, the first biasing member 15 biases the relief valve body 14 in the first closing direction (namely, one side in the axial direction) against the pressure of the first port 2.

Also, in the first biasing member 15, the biasing force is adjusted by advancing or retracting the adjustment plug 22. More specifically, by loosening the locknut 23 and rotating the adjustment plug 22, it is possible to advance or retract the adjustment plug 22. As a result, the compression amount of the first biasing member 15 is adjusted. The biasing force of the first biasing member 15 is adjusted by the compression amount of the first biasing member 15.

### Check valve body

The check valve body 16 opens or closes the check passage 24. Also, the check valve body 16 receives the pressure of the second port 3 in the direction of opening the check passage 24 (hereinafter, referred to as "second opening direction"). Still more specifically, the check valve body 16 is accommodated in the housing 12, more specifically in the body 21. And, the check valve body 16 is slidably supported by the seat member 13. More specifically, the check valve body 16 is slidably attached outside the seat member 13. And, the check valve body 16 is unseated from or seated on the check valve seat 21c by sliding. The check valve body 16 is seated on the check valve seat 21c to close the check passage 24. Also, the check valve body 16 has a communication passage 16a. The communication passage 16a guides the hydraulic fluid flowing from the first port 2 to the relief passage 25 of the seat member 13 in the condition that the check valve body 16 closes the check passage 24. In the present embodiment, the check valve body 16 is formed in the following manner.

That is, the check valve body 16 is formed to have a cylindrical shape. And, the check valve body 16 allows insertion of the seat member 13 in the inner hole thereof in a slidable manner. And, the check valve body 16 is accommodated in the inner space 21b of the body 21. Also, the check valve body 16 forms an annular in-valve passage 26 between the check valve body 16 and the body 21. The in-valve passage 26 connects to the second port 3 via the plurality of communication passages 21d. And, the in-valve passage 26 forms the check passage 24 together with the opening hole 21a and the plurality of communication passages 21d. Also, in the check valve body 16, one end part that is an open end part of one side in the axial direction is tapered toward one side in the axial direction. The check valve body 16 closes the check passage 24 by seating the one end part on the check valve seat 21c. Also, the check valve body 16 leaves the check valve seat 21c by sliding on the other side in the axial direction along the seat member 13. Thus, the check passage 24 opens. Also, the check valve body 16 receives the pressure in the one end part from the fluid flowing in the check passage 24. That is, the check valve body 16 receives the pressure of the second port 3 in the second opening direction in the one end part.

Further, the check valve body 16 has the communication passage 16a, a middle part 16b, and a large-diameter part 16c in the inner hole of the check valve body 16. The communication passage 16a, the middle part 16b, and the large-diameter part 16c are located in this order from one side in the axial direction, and have increasing diameters in the order of the communication passage 16a, the middle part 16b, and the large-diameter part 16c. The communication passage 16a having the smallest diameter among these three parts connects to the first port 2 via the opening hole 21a. In the middle part 16b, one end part in the axial direction of the seat member 13 is slidably inserted. Also, in the large-diameter part 16c, the middle portion of the seat member 13 is slidably inserted in a sealed state. Accordingly, the check valve body 16 is stably supported at two sites of the middle part 16b and the large-diameter part 16c which are sliding parts. Also, between the large-diameter part 16c and the one end side portion in the axial direction of the seat member 13, and around the middle portion of the seat member 13, a second spring accommodating space 16d of an annular shape is formed. The second spring accommodating space 16d connects to the relief passage 25 via the communication holes 13g. Therefore, hydraulic fluid from the first port 2 flows into the second spring accommodating space 16d via the relief passage 25. Accordingly, the check valve body 16 receives, in its inner peripheral surface, the pressure of the first port 2 in the direction of closing the check passage 24 (hereinafter, referred to as "second closing direction").

As described above, the check valve body 16 receives, in its one end part, the pressure of the second port 3 in the second opening direction, and receives, in its inner peripheral surface, the pressure of the first port 2 in the second closing direction. And, the check valve body 16 receives, in the pressure receiving part 16e of the one end part, the pressures of the ports 3, 2 in the directions opposed to each other. And, a second pressure receiving area A2, which is an area of the portion where the pressures of the ports 3, 2 act in the directions opposed to each other in the pressure receiving part 16e, corresponds to an area obtained by subtracting the area of a bore D2 of the opening hole 21a from the area of a hole diameter D1 of the large-diameter part 16c. The check valve body 16 receives from the hydraulic fluid the load that is the product of the second pressure receiving area A2 multiplied by differential pressure Δp obtained by subtracting the pressure of the first port 2 from the pressure of the second port 3, in the second opening direction.

### Second biasing member

The second biasing member 17 biases the check valve body 16 in the second closing direction against the pressure of the second port 3. More specifically, the second biasing member 17 is a spring member. In the present embodiment, the second biasing member 17 is a compression coil spring. The second biasing member 17 is accommodated in the second spring accommodating space 16d in the check valve body 16 in a compressed state. More specifically, end parts of the second biasing member 17 are brought into contact with the seat member 13 and the check valve body 16, respectively. Thus, the second biasing member 17 biases the check valve body 16 in the second closing direction (that is, one side in the axial direction) against the pressure of the second port 3.

### Relief operation of relief valve

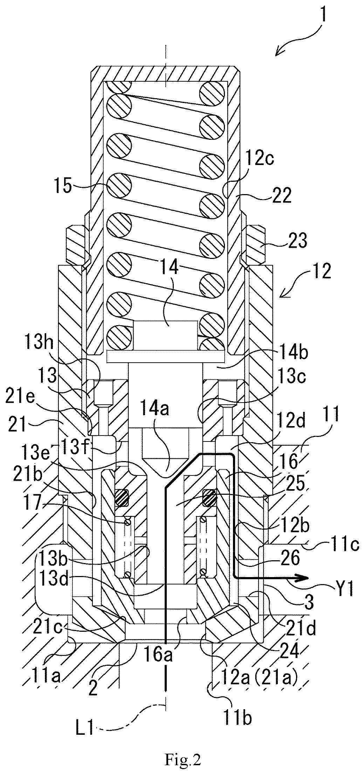

In the relief valve 1, the hydraulic fluid to be guided to the first port 2 is guided to the passage portion 13b of the relief passage 25 via the opening hole 21a and the communication passage 16a. And, as the pressure of the first port 2 exceeds a relief pressure, the relief valve 1 operates as follows. That is, as shown in Fig. 2, the relief valve body 14 is pushed up against the biasing force of the first biasing member 15, and the relief valve body 14 leaves the relief valve seat 13e. Thus, the relief passage 25 opens. As a result, the first port 2 connects to the second port 3 via the relief passage 25. Then, hydraulic fluid of the first port 2 is discharged to the second port 3 (see an arrow Y1 in Fig. 2). At the time of pushing up of the relief valve body 14, the first biasing member 15 is compressed, and thus the first spring accommodating space 12c is contracted. As a result, the hydraulic fluid is discharged into the valve space 12b from the first spring accommodating space 12c via the communication passages 13h. Since the communication passages 13h form a restrictor, the relief valve body 14 is pushed up gently. Therefore, the relief passage 25 can be opened gently, so that occurrence of hunting can be prevented.

Also, in the relief valve 1, the aforementioned relief pressure can be adjusted in the following manner. That is, in the relief valve 1, by loosening the locknut 23, the adjustment plug 22 advances or retracts. In the present embodiment, the adjustment plug 22 advances or retracts by being rotated with a jig. By advancing or retracting the adjustment plug 22 in this manner, it is possible to vary the compression amount of the first biasing member 15. As a result, the biasing force with which the first biasing member 15 biases the relief valve body 14 changes, and the relief pressure can be adjusted.

### Check operation of relief valve

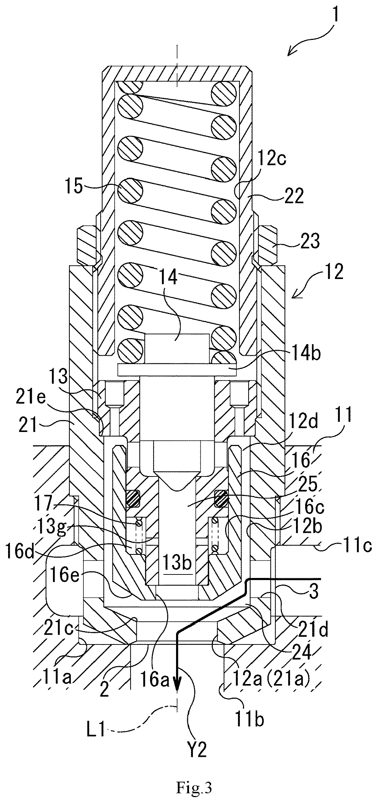

Also, in the relief valve 1, the hydraulic fluid is guided from the second port 3 to the check passage 24, and the hydraulic fluid from the first port 2 is guided to the second spring accommodating space 16d via the relief passage 25. And, as the pressure of the first port 2 becomes lower than the pressure of the second port 3, the check valve body 16 operates as follows. That is, as the load that the check valve body 16 receives by differential pressure Δp becomes larger than the biasing force of the second biasing member 17, the check valve body 16 is pushed up. As a result, the check valve body 16 leaves the check valve seat 21c. Thus, the check passage 24 opens. As a result, the second port 3 connects to the first port 2 via the check passage 24. Then, the hydraulic fluid of the second port 3 is supplied to the first port 2 (see an arrow Y2 in Fig. 3).

### Operation and effect of relief valve

In the relief valve 1 of the present embodiment, by advancing or retracting the adjustment plug 22, the pressure at which the relief valve body 14 starts leaving the relief valve seat 13e, namely, the relief pressure can be adjusted from outside.

Also, in the relief valve 1 of the present embodiment, by seating of the relief valve body 14 on the seat member 13 provided in the housing 12, the relief passage 25 is closed. Therefore, the two valve bodies 14, 16 of the relief valve body 14 and the check valve body 16 can operate independently from each other. That is, since only the check valve body 16 can be independently operated, it is possible to improve the responsiveness of the check valve body 16 as compared with the case where the two valve bodies 14, 16 operate in conjunction with each other. Still more specifically, since the relief valve body 14 and the check valve body 16 operate independently from each other, it is possible to reduce the weight of the part that operates in the check operation. Therefore, it is possible to improve the responsiveness of the check valve body 16 as compared with the case where the two valve bodies 14, 16 operate in conjunction with each other. Also, in the relief valve 1, the check valve body 16 is slidably supported by the seat member 13. As a result, the seat member 13 functions as a guide for the check valve body 16, so that it is possible to prevent the number of parts from increasing.

In the relief valve 1 of the present embodiment, the check valve body 16 is slidably supported by the seat member 13 in two sliding parts of the middle part 16b and the large-diameter part 16c. And, the second biasing member 17 is accommodated in the second spring accommodating space 16d formed between the middle part 16b and the large-diameter part 16c. Therefore, it is possible to form the relief valve 1 compactly.

Also, in the relief valve 1 of the present embodiment, since the relief valve body 14 is a direct-acting valve body, it is possible to reduce the number of parts as compared with a differential-acting valve body. Further, in the relief valve 1 of the present embodiment, the relief valve body 14, the first biasing member 15, the check valve body 16, and the second biasing member 17 are assembled to the housing 12. Therefore, the relief valve 1 can be provided as a cartridge. Therefore, it is possible to improve the portability and the assemblability to the valve block 11 of the relief valve 1.

### Embodiment 2

A relief valve 1A of Embodiment 2 resembles the relief valve 1 of Embodiment 1 in configuration. Therefore, the configuration of the relief valve 1A of Embodiment 2 is described mainly about the point different from that of the relief valve 1 of Embodiment 1, and the same configuration is denoted by the same reference numeral, and the description is omitted. The same applies also to the relief valve 1B of Embodiment 3.

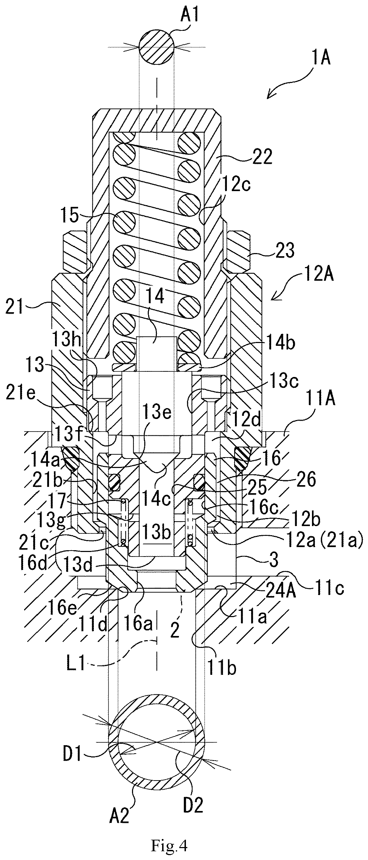

The relief valve 1A of Embodiment 2 shown in Fig. 4 includes the valve block 11A, a housing 12A, the seat member 13, the relief valve body 14, the first biasing member 15, the check valve body 16, and the second biasing member 17. The valve block 11A has the valve hole 11a, the first passage 11b, and the second passage 11c. And, in the valve block 11A, the check valve seat 11d is formed around the first port 2. And, the first port 2 and the second port 3 are connected by the valve hole 11a. Also, the valve hole 11a forms a check passage 24A.

The housing 12A is formed to have a short length in the axial direction compared with the housing 12 of Embodiment 1. More specifically, a body 21A is formed to have a short length in the axial direction compared with the body 21 of Embodiment 1. Therefore, one end part of the body 21A is located close to the other end side in the axial direction, compared with the one end part of the body 21 of Embodiment 1. Further, one end side portion of the check valve body 16 projects from the opening hole 21a of the body 21A. And, the check valve body 16 is seated on the check valve seat 11d of the valve block 11A. Also, the check valve body 16 is arranged in the opening hole 21a with a clearance from the body 21A. Therefore, the annular space 12d connects to the second port 3 via the opening hole 21a.

In the relief valve 1A configured as described above, as the pressure of the first port 2 exceeds the relief pressure, the relief valve body 14 leaves the relief valve seat 13e, and the relief passage 25 opens. As the relief passage 25 opens, the first port 2 and the second port 3 connect with each other via the valve space 12b via the opening hole 21a. And, hydraulic fluid of the first port 2 is discharged to the second port 3. On the other hand, as the pressure of the first port 2 becomes smaller than the pressure of the second port 3, and the load that the check valve body 16 receives by differential pressure Δp becomes larger than the biasing force of the second biasing member 17, the check valve body 16 leaves the check valve seat 11d, and the check passage 24A opens. As a result, the first port 2 and the second port 3 connect with each other via the check passage 24A, and the hydraulic fluid of the second port 3 is supplied to the first port 2.

The relief valve 1A of Embodiment 2 configured as described above exerts the same operation and effect as the relief valve 1 of Embodiment 1.

### Embodiment 3

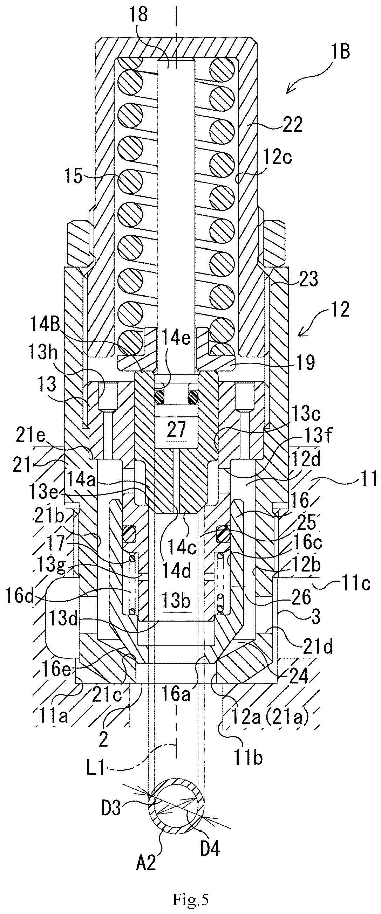

The relief valve 1B of Embodiment 3 shown in Fig. 5 includes the valve block 11, the housing 12, the seat member 13, a relief valve body 14B, the first biasing member 15, the check valve body 16, the second biasing member 17, a rod 18, and a spring bearing member 19. The relief valve body 14B is a differential-acting valve body having a backpressure chamber 27 to which the hydraulic fluid flowing in the relief passage 25 is guided. More specifically, the relief valve body 14B is formed to have a bottomed cylindrical shape. And, the relief valve body 14B seats its bottom part (namely, the distal end side portion 14a) on the relief valve seat 13e to close the relief passage 25. Also, in the relief valve body 14B, a through hole 14d is formed along its axial direction (coincident with the axial line L1 in the present embodiment). The through hole 14d faces with the passage portion 13b of the relief passage 25. The rod 18 is inserted in an inner hole 14e of the relief valve body 14B in a sealed state. The rod 18 is arranged such that the distal end portion inserted into the inner hole 14e is apart from the bottom part of the relief valve body 14B. Thus, in the inner hole 14e of the relief valve body 14, the backpressure chamber 27 is formed. The backpressure chamber 27 connects to the passage portion 13b of the relief passage 25 via the through hole 14d. Therefore, to the backpressure chamber 27, the pressure of the first port 2 is guided. Also, a proximal end part of the rod 18 is in contact with the ceiling surface of the adjustment plug 22. In this manner, the rod 18 is prevented from getting out of the relief valve body 14. Also, the spring bearing member 19 is inserted into the rod 18, and is in contact with the proximal end of the relief valve body 14B. And, the spring bearing member 19 bears one end part of the first biasing member 15.

In the relief valve 1B configured as described above, the same relief operation and check operation as in the relief valve 1 of Embodiment 1 are executed, and the relief valve 1B has the following function in the relief operation. The relief valve body 14B receives a load in the first closing direction from the hydraulic fluid guided to the backpressure chamber 27 from the first port 2 via the relief passage 25. Therefore, the load that the relief valve body 14B receives from the hydraulic fluid of the passage portion 13b is partially cancelled. Due to this cancelling, the load in the opening direction that acts on the relief valve body 14B becomes the load that is the product of a third pressure receiving area A3 obtained by subtracting the cross section of a hole diameter D4 of the backpressure chamber 27 from the opening area of a pore size D3 of an opening 13d, multiplied by the pressure of the first port 2. Therefore, the load in the opening direction that acts on the relief valve body 14B can be controlled to small, and the seat diameter of the relief valve body 14 can be made large, as compared with the direct-acting relief valve body. As a result, in the relief valve 1, it is possible to achieve a large flow amount as compared with the relief valve 1 of the direct-acting type.

Besides the above, the relief valve 1B of the third embodiment exerts the same operation and effect as the relief valve 1 of Embodiment 1.

### Other embodiments

In the relief valves 1, 1A, 1B of Embodiments 1 to 3, for example, the first port 2 is an actuator port and the second port 3 is a tank port, however, the ports are not necessarily be such ports. While the check valve body 16 is inserted outside the seat member 13, the check valve body 16 may be inserted inside seat member 13. Also, in the relief valves 1, 1A, 1B of Embodiments 1 to 3, the elements 13 to 17 are accommodated in the housing 12 to form a cartridge, however, they are not necessarily be formed into a cartridge. That is, the elements 13 to 17 may be assembled to the housing 12 that is assembled to the valve block 11.

Also, in the relief valves 1, 1A, 1B of Embodiments 1 to 3, the adjustment plug 22 advances or retracts with respect to the body 21 by being rotated, however, the adjustment plug 22 may advance or retract by pushing or drawing the adjustment plug 22. Also, the adjustment member is not limited to the adjustment plug 22, but may be an adjustment screw. The adjustment screw is capable of advancing or retracting with respect to the body 21 by being rotated as with the case of the adjustment plug 22. And, by advancing or retracting the adjustment screw, the relief pressure is adjusted.

Various modifications and other embodiments of the present invention will be apparent to those skilled in the art from the above description. According, the above description should be interpreted merely as illustration, and is provided for the purpose of indicating the best mode for carrying out the present invention to those skilled in the art. The details of the structure and/or the function can be substantially changed without departing from the spirit of the present invention.

## Claims

1. A relief valve with a check function of relieving hydraulic fluid from a first port to a second port, the relief valve with a check function comprising:
a housing having a body, and an adjustment member provided to be capable of advancing and retracting with respect to the body;
a seat member provided in the body, the seat member being formed with a relief passage connecting to each of the first port and the second port;
a relief valve body that is unseated from or seated on the seat member to open or close the relief passage, the relief valve body receiving pressure of the first port in a direction of opening the relief passage;
a first biasing member that biases the relief valve body against the pressure of the first port, with a biasing force being adjusted by advance or retraction of the adjustment member;
a check valve body that opens or closes a check passage connecting to each of the first port and the second port, the check valve body receiving pressure of the second port in a direction of opening the check passage; and
a second biasing member that biases the check valve body against the pressure of the second port.

2. The relief valve with a check function according to claim 1, wherein the check valve body is slidably supported by the seat member.

3. The relief valve with a check function according to claim 2, wherein
the check valve body has a communication passage, and is inserted outside the seat member, and
the communication passage guides hydraulic fluid flowing from the first port to the relief passage of the seat member in a state that the check valve body closes the check passage.

4. The relief valve with a check function according to claim 3, wherein
the check valve body is slidably supported by the seat member in at least two sliding parts spaced from each other, and
the second biasing member is accommodated between the two sliding parts in the check valve body.

5. The relief valve with a check function according to any one of claims 1 to 4, wherein the relief valve body has a pressure-receiving part that receives pressure of the first port, and is a direct-acting valve body having the pressure-receiving part formed of a solid member.

6. The relief valve with a check function according to any one of claims 1 to 4, wherein the relief valve body is a differential-acting valve body having a backpressure chamber to which hydraulic fluid flowing in the relief passage is guided.

7. The relief valve with a check function according to any one of claims 1 to 6, wherein the relief valve body, the first biasing member, the check valve body, and the second biasing member are assembled to the housing.
